# EUROPEAN PATENT APPLICATION

(11) **EP 4 598 274 A1**
(43) Date of publication of application: **06.08.2025**
(21) Application number: 23873202.8
(22) Date of filing: 27.09.2023
(51) Int. Cl.: H05B 45/30, H05B 45/50, H05B 45/34, H05B 45/20, H02J 7/00

(54) **LED DRIVING DEVICE AND LED LIGHTING DEVICE COMPRISING SAME**

(30) Priority: 28.09.2022 KR 20220123626; 01.11.2022 KR 20220143757
(71) Applicant: LX Semicon Co., Ltd., Daejeon 34027 (KR)
(72) Inventor: SEO, Byung Jun, Daejeon 34027 (KR); KIM, Ji Hwan, Daejeon 34027 (KR); WOO, Young Jin, Daejeon 34027 (KR); LEE, Jong Min, Daejeon 34027 (KR); HONG, Ju Pyo, Daejeon 34027 (KR)
(74) Representative: Ter Meer Steinmeister & Partner
(86) International application number: PCT/KR2023/015017
(87) International publication number: WO 2024/072093

(57) **Abstract**

Provided are: an LED driving device for maintaining LED power regardless of battery voltage; and an LED lighting device including same, the LED driving device comprising: a selection unit, which senses voltage flowing into an LED string unit so as to select an LED driving condition of the LED string unit on the basis of the sensed voltage; and a current control driving unit for controlling an LED current such that some LEDs or all LEDs of the LED string unit are driven in correspondence to the LED driving condition of the selection unit, wherein the current control driving unit can adjust a current flowing into each LED so that the total LED power corresponding to the driving of the some LEDs and the total LED power corresponding to the driving of all of the LEDs are the same.

## Description

### TECHNICAL FIELD

The present disclosure relates to an LED driving device for maintaining LED power regardless of a battery voltage and an LED lighting device including the same.

### BACKGROUND ART

Typically, a vehicle may be provided with lighting devices for various purposes in either indoors or outdoors.

For example, the vehicle's lighting device may include a rear combination lamp installed on each of both rear sides of the vehicle.

The rear combination lamp may include a turn signal lamp, a brake lamp, a tail lamp, a reverse lamp, etc., and may be used as a means to inform the driving intention or driving status of the vehicle to a driver of another vehicle located at the rear.

Recently, lighting devices using high-brightness light emitted diodes (LEDs) are being developed, and rear combination lamps using the LEDs are being developed as lighting devices for vehicles.

The rear combination lamps that use the LEDs as light sources are changed into various designs, and the number of LEDs used in the rear combination lamps is gradually increasing as the design changes.

As described above, the LED lighting devices need to be developed to operate stably, save power, and be implemented with a small number of components.

However, when a voltage supplied from the battery is lowered due to external or internal environments, a current controller of the LED driving device fails to perform a current control function, and thus, current flowing through each LED decreases to cause overall brightness of the lighting device to be darken.

Thus, in the future, it is necessary to develop an LED driving device that is capable of maintaining LED power regardless of the battery voltage and prevent the brightness reduction.

### DISCLOSURE OF THE INVENTION

### TECHNICAL PROBLEM

An object of the present disclosure is to solve the above-mentioned problems and other problems.

An object of the present invention is to provide an LED driving device, in which an LED voltage is sensed to select LED driving conditions, and current flowing through each LED is adjusted so that the sum of LED power corresponding to some LED driving conditions and the sum of LED power corresponding to all LED driving are the same to prevent brightness reduction by always equally maintaining the LED power regardless of the battery voltage, and an LED lighting device including the same.

### TECHNICAL SOLUTION

An LED driving device according to an embodiment of the present disclosure includes: a selection unit configured to sense a voltage flowing through an LED string unit so as to select an LED driving condition of the LED string unit on the basis of the sensed voltage; and a current control driving unit configured to control LED current so that some or all of LEDs of the LED string unit are driven in correspondence to the LED driving condition of the selection unit, wherein the current control driving unit is configured to adjust current flowing through each LED so that the sum of LED power corresponding to the driving of the some of the LEDs and the sum of LED power corresponding to the driving of all of the LEDs are the same.

An LED driving member of an LED driving device configured to drive LEDs of an LED string unit according to an embodiment of the present disclosure includes: sensing a voltage flowing through the LED string unit; selecting an LED driving condition of the LED string unit on the basis of the sensed voltage; controlling LED current so that some or all of the LEDs of the LED string unit are driven in correspondence to the LED driving condition, wherein, in the controlling of the LED current so that some or all of the LEDs are driven, the current flowing through each LED is adjusted so that the sum of LED power corresponding to the driving of some of the LEDs and the sum of LED power corresponding to the driving of all of the LEDs are the same.

An LED lighting device according to an embodiment of the present disclosure includes: an LED string unit to which a plurality of LEDs are connected; a battery unit configured to supply a voltage to the LED string unit; and an LED driving unit configured to drive some or all of the LEDs of the LED string unit, wherein the LED driving unit is configured to: sense a voltage flowing through an LED string unit to select an LED driving condition of the LED string unit on the basis of the sensed voltage; control LED current so that some or all of the LEDs of the LED string unit are driven in correspondence to the LED driving condition; and adjust current flowing through each LED so that the sum of LED power corresponding to the driving of the some of the LEDs and the sum of LED power corresponding to the driving of all of the LEDs are the same.

### ADVANTAGEOUS EFFECTS

According to the embodiment of the present disclosure, in the LED driving device and the LED lighting device including the same, the LED voltage may be sensed to select the LED driving conditions, and the current flowing through each LED may be adjusted so that the sum of the LED power corresponding to some LED driving conditions and the sum of the LED power corresponding to all the LED driving are the same to prevent the brightness reduction by always uniformly maintaining the LED power regardless of the battery voltage.

### BRIEF DESCRIPTION OF THE DRAWINGS

FIG. 1 is a view for explaining an LED driving device according to an embodiment of the present disclosure.
FIG. 2 is a view for explaining an LED string unit of FIG. 1.
FIGS. 3 to 5 are views for explaining a node voltage sensing point of the LED string unit.
FIG. 6 is a view for explaining a selection unit of FIG. 1.
FIGS. 7 and 8 are views for explaining a voltage adjustment unit of FIG. 1.
FIG. 9 is a view for explaining a current adjustment unit of FIG. 1.
FIG. 10 is a circuit diagram for explaining an LED driving device according to a first embodiment of the present disclosure.
FIGS. 11 and 12 are circuit diagrams for explaining a circuit operation of the LED driving device according to the first embodiment of the present disclosure.
FIG. 13 is a circuit diagram for explaining an LED driving device according to a second embodiment of the present disclosure.
FIGS. 14 and 15 are circuit diagrams for explaining a circuit operation of the LED driving device according to the second embodiment of the present disclosure.
FIG. 16 is a graph illustrating a change in LED current according to a battery voltage of the present disclosure.
FIG. 17 is a flowchart for explaining an LED driving method of the present disclosure.
FIG. 18 is a view for explaining an LED lighting device of the present disclosure.

### MODE FOR CARRYING OUT THE INVENTION

Hereinafter, embodiments disclosed in this specification is described with reference to the accompanying drawings, and the same or corresponding components are given with the same drawing number regardless of reference number, and their duplicated description will be omitted. The suffixes "module" and "unit" for components used in the description below are assigned or mixed in consideration of easiness in writing the specification and do not have distinctive meanings or roles by themselves. Moreover, detailed descriptions related to well-known functions or configurations will be ruled out in order not to unnecessarily obscure subject matters of the present disclosure. However, this does not limit the present disclosure within specific embodiments and it should be understood that the present disclosure covers all the modifications, equivalents, and replacements within the idea and technical scope of the present disclosure.

It will be understood that although the ordinal numbers such as first and second are used herein to describe various elements, these elements should not be limited by these numbers. The terms are only used to distinguish one component from other components.

It will also be understood that when an element is referred to as being "'connected to" or "engaged with" another element, it can be directly connected to the other element, or intervening elements may also be present. It will also be understood that when an element is referred to as being 'directly connected to' another element, there is no intervening elements.

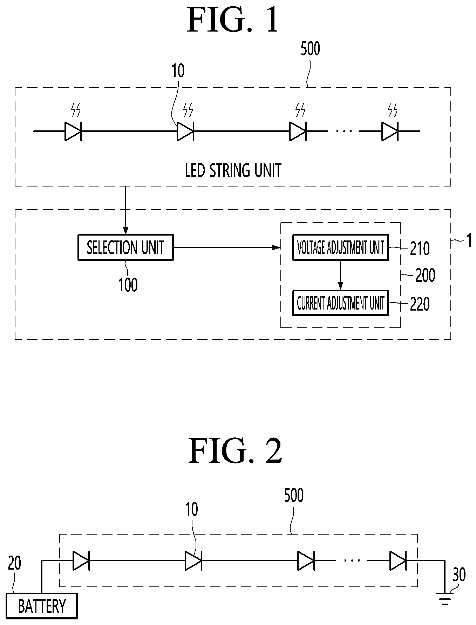

FIG. 1 is a view for explaining an LED driving device according to an embodiment of the present disclosure.

As illustrated in FIG. 1, an LED driving device 1 of the present disclosure may include a selection unit 100 that senses a voltage flowing through an LED string unit 500 to select an LED driving condition of the LED string unit 500 on the basis of the sensed voltage, and a current control driving unit 200 that controls the LED current so that some or all of the LEDs 10 of the LED string unit 500 are driven to correspond to the LED driving condition of the selection unit 100.

Here, the LED string unit 500 may include a plurality of LEDs 10 that are connected in series and arranged in sequence and may include one LED string or a plurality of LED strings.

Here, the plurality of LEDs 10 may be driven by a voltage supplied from a battery to emit light.

In addition, in the LED string unit 500, an input terminal of a first LED 10 of the plurality of LEDs 10 arranged in sequence may be connected to a battery, and an output terminal of the last LED 10 may be grounded.

For example, in the LED string unit 500, a first LED, a second LED, and a third LED may be connected in series to each other and be arranged sequentially.

Here, the input terminal of the first LED may be connected to the battery, an output terminal of the first LED may be connected to an input terminal of the second LED, an input terminal of the third LED may be connected to an output terminal of the second LED, and an output terminal of the third LED may be grounded.

Here, the selection unit 100 may be connected to a first node of a connection line between the output terminal of the second LED and the input terminal of the third LED and may sense a node voltage between the second LED and the third LED through the first node.

In some cases, the selection unit 100 may be connected to a second node of the connection line between the output terminal of the first LED and the input terminal of the second LED and may sense a node voltage between the first LED and the second LED through the second node.

In another case, the selection unit 100 may be connected to a third node of a connection line between the output terminal of the battery and the input terminal of the first LED and may sense a node voltage between the battery and the first LED through the third node.

The selection unit 100 may sense the node voltage of the LED string unit 500, compare the sensed node voltage with a preset node reference voltage, and select the LED driving conditions on the basis of the comparison result.

Here, when sensing the node voltage, the selection unit 100 may sense the node voltage from a node between a first group and a second group if the plurality of LEDs 10 included in the LED string unit 500 are separated into the first group and the second group.

For example, the first group may include at least one LED and be disposed between the battery and the second group.

In addition, the second group may include at least one LED and be disposed between the first group and the ground.

Here, the selection unit 100 may output a first selection signal that drives only LEDs of the first group or a second selection signal that drives all LEDs of the first and second groups on the basis of the comparison result between the sensed node voltage and the preset node reference voltage.

That is, when selecting the LED driving condition, the selection unit 100 may output the first selection signal that drives only some LEDs 10 of the LED string unit 500 if the sensed node voltage is lower than the node reference voltage, or may output the second selection signal that drives all the LEDs of the LED string unit 500 if the sensed node voltage is higher than the node reference voltage.

As described above, the selection unit 100 may output the first selection signal that turns off some LEDs and turns on the remaining LEDs when the sensed node voltage is lower than the voltage that drives all the LEDs, and may output the second selection signal that turns on all the LEDs when the sensed node voltage is higher than the voltage that drives all the LEDs.

Thus, it is preferable that the selection unit 100 selects a node between the LED group to be turned off and the LED group to be turned on as a voltage sensing point according to the node voltage.

For example, when the LED string unit 500 includes the first LED, the second LED, and the third LED that are connected in series to each other, the selection unit 100 may select a point between the output terminal of the second LED and the input terminal of the third LED as the voltage sensing point if the LED groups to be turned on are the first LED and the second LED, and the LED group to be turned off is the third LED.

As another example, the selection unit 100 may select a voltage sensing point between the output terminal of the first LED and the input terminal of the second LED.

As another example, the selection unit 100 may select a point between the input terminal of the battery and the first LED as the voltage sensing point.

In addition, the selection unit 100 may include a comparator including a first input terminal into which the node voltage of the LED string unit 500 is input, a second input terminal into which the preset node reference voltage is input, and an output terminal that outputs the selection signal to the current control driving unit 200.

Here, the first input terminal of the comparator may be connected to a node between a first group and a second group when the plurality of LEDs 10 included in the LED string unit 500 are separated into the first group and the second group.

For example, the first input terminal of the comparator may be connected to a node between the second LED and the third LED when the first LED, the second LED, and the third LED are sequentially arranged from the battery in the LED string unit 500.

Here, the node reference voltage of the selection unit 100 may be set on the basis of the battery voltage supplied at a time point when some LEDs 10 of the LED string unit 500 are turned off if the battery voltage supplied to the LED string unit 500 decreases.

The current control driving unit 200 may control current flowing through each LED so that the sum of LED power corresponding to driving some LEDs and the sum of LED power corresponding to driving all LEDs are the same.

This reason is to prevent brightness reduction by always uniformly maintaining the LED power regardless of the battery voltage.

As an example, the current control driving unit 200 may include a voltage adjustment unit 210 that provides one of a plurality of reference voltages in correspondence to the selection signal of the selection unit 100, and a current adjustment unit 220 that is switched in correspondence to the reference voltage input from the voltage adjustment unit 210 to control the LED current so that some or all of the LEDs of the LED string unit 500 are driven.

Here, the voltage adjustment unit 210 may include a voltage regulator and a switch.

For example, the voltage regulator may provide a first reference voltage, a second reference voltage lower than the first reference voltage, and a third reference voltage lower than the second reference voltage and may output the second reference voltage to the current regulator 220, and the switch may be switched to output the first reference voltage or the third reference voltage to the current regulator 220 in correspondence to the selection signal of the selection unit 100.

Here, the voltage regulator may include a first output terminal that outputs the first reference voltage, a second output terminal that outputs the second reference voltage, and a third output terminal that outputs the third reference voltage, and also, the first output terminal and the third output terminal of the voltage regulator may be connected to the switch, and the second output terminal of the voltage regulator may be connected to the current adjustment unit 220.

For example, the voltage regulator may include a band gap reference circuit part that generates a source reference voltage, a reference voltage distribution part that distributes the source reference voltage into a plurality of different reference voltages, and a voltage buffer connected between the band gap reference circuit part and the reference voltage distribution part.

In addition, the reference voltage distribution part may have a plurality of resistors connected in series to provide the source reference voltage by distributing the source reference voltage into a plurality of different reference voltages when the source reference voltage is input and may output the distributed reference voltage through the output terminal connected between the resistors.

For example, the reference voltage distribution part may include a first resistor connected to the voltage buffer to receive the source reference voltage, a second resistor connected to the first resistor, and a third resistor having one side connected to the second resistor and the other side grounded and may include a first output terminal connected between the voltage buffer and the first resistor to output the first reference voltage, a second output terminal connected between the first resistor and the second resistor to output the second reference voltage lower than the first reference voltage, and a third output terminal connected between the second resistor and the third resistor to output the third reference voltage lower than the second reference voltage.

In addition, when the first selection signal is input from the selection unit 100, the switch may connect the first output terminal of the voltage regulator to the current adjustment unit 220 to apply the first reference voltage to the current adjustment unit 220, and when the second selection signal is input from the selection unit 100, the switch may connect the third output terminal of the voltage regulator to the current adjustment unit 220 to apply the third reference voltage to the current adjustment unit 220.

Next, the current adjustment unit 220 may include a first switch circuit that is turned on/off in correspondence to the first reference voltage or the third reference voltage, and a second switch circuit that is turned off/on in correspondence to the on/off of the first switch circuit. When the first switch circuit is turned on, and the second switch circuit is turned off, only some of the LEDs of the LED string unit 500 may be driven, and when the first switch circuit is turned off, and the second switch circuit is turned on, all of the LEDs of the LED string unit 500 may be driven.

Here, the first switch circuit may include a first amplifier and a first transistor.

For example, the first amplifier may include a first input terminal connected to the switch to receive the first reference voltage or the third reference voltage, a second input terminal connected to the ground, and an output terminal that outputs the first signal when the first reference voltage is input, and the second signal when the third reference voltage is input, and the first transistor may be connected to the output terminal of the first amplifier and be turned on when the first signal is input from the output terminal of the first amplifier and be turned off when the second signal is input from the output terminal of the first amplifier.

Here, the first amplifier may be regulated to a higher voltage among the voltages input to the first input terminal and the voltage input to the second input terminal.

In addition, the first transistor may include a gate terminal connected to the output terminal of the first amplifier, a drain terminal connected to the LED string unit 500, and a source terminal connected to a node between the second input terminal of the first amplifier and the ground.

Here, the resistor may be disposed between the source terminal of the first transistor and the ground, and a resistance value of the resistor may be determined on the basis of the reference voltage of the current control driving unit 200.

For example, the resistance value R₁ of the resistor may be determined by a first equation expressed by I_{LED1} = V_{REF1}/R₁ (where R₁ is a resistance value, I_{LED1} is a current value flowing through each LED when only some of the LEDs in the LED string part are driven, and V_{REF1} is a first reference voltage value of the current control driving unit), and a second equation expressed by I_{LED2} = V_{REF2}/R₁ (where R₁ is a resistance value, I_{LED2} is a current value flowing through each LED when all of the LEDs in the LED string part are driven, and V_{REF2} is a second reference voltage value of the current control driving unit).

Next, the first transistor may be connected in parallel to the comparator of the selection unit 100, and the drain terminal of the first transistor and the input terminal of the comparator of the selection unit 100 may be connected to the same node between the LEDs of the LED string unit 500.

For example, the first transistor may include a metal oxide semiconductor field effect transistor (MOSFET).

Next, the second switch circuit may include a second amplifier and a second transistor.

Here, the second amplifier may include a first input terminal connected to the voltage regulator to receive the second reference voltage, a second input terminal connected to the first switch circuit to receive the first reference voltage or the third reference voltage, and an output terminal configured to output a first signal when the second reference voltage and the third reference voltage lower than the second reference voltage are input and to output a second signal when the second reference voltage and the first reference voltage higher than the second reference voltage are input, and the second transistor may be connected to the output terminal of the second amplifier and may be turned on when the first signal is input from the output terminal of the second amplifier and turned off when the second signal is input from the output terminal of the second amplifier.

Here, the second amplifier may be regulated to a higher voltage among the voltages input to the first input terminal and the voltage input to the second input terminal.

In addition, the second transistor may include a gate terminal connected to the output terminal of the second amplifier, a drain terminal connected to the LED string unit 500, and a source terminal connected to a node between the second input terminal of the second amplifier and the ground.

Here, the drain terminal of the second transistor may be connected in series to the last LED at an end of the LED string unit 500.

Next, the resistor may be disposed between the source terminal of the second transistor and the ground, and a resistance value of the resistor may be determined on the basis of the reference voltage of the current control driving unit 200.

For example, the resistance value R₁ of the resistor may be determined by a first equation expressed by I_{LED1} = V_{REF1}/R₁ (where R₁ is a resistance value, I_{LED1} is a current value flowing through each LED when only some of the LEDs in the LED string part are driven, and V_{REF1} is a first reference voltage value of the current control driving unit), and a second equation expressed by I_{LED2} = V_{REF2}/R₁ (where R₁ is a resistance value, I_{LED2} is a current value flowing through each LED when all of the LEDs in the LED string part are driven, and V_{REF2} is a second reference voltage value of the current control driving unit).

Next, the first amplifier, the first transistor of the first switch circuit, and the second amplifier of the second switch circuit may be connected in parallel to each other at a node between the source terminal of the second transistor and the resistor.

For example, the second transistor may include a metal oxide semiconductor field effect transistor (MOSFET).

As another embodiment, the current control driving unit 200 may include a voltage adjustment unit 210 that provides one of a plurality of reference voltages in correspondence to the selection signal of the selection unit 100, and a current adjustment unit 220 that is switched in correspondence to the reference voltage input from the voltage adjustment unit 210 to control the LED current so that some or all of the LEDs of the LED string unit 500 are driven.

Here, the voltage adjustment unit 210 may include a voltage regulator that provides a first reference voltage and a second reference voltage that is lower than the first reference voltage, and a switch that is switched to output the first reference voltage or the second reference voltage to the current adjustment unit 220 in correspondence to the selection signal of the selection unit 100.

Here, the voltage regulator may include a first output terminal that outputs the first reference voltage and a second output terminal that outputs the second reference voltage, and the first output terminal and the second output terminal of the voltage regulator may be connected to the switch.

For example, the voltage regulator may include a band gap reference circuit part that generates a source reference voltage, a reference voltage distribution part that distributes the source reference voltage into a plurality of different reference voltages, and a voltage buffer connected between the band gap reference circuit part and the reference voltage distribution part.

In addition, the reference voltage distribution part may have a plurality of resistors connected in series to provide the source reference voltage by distributing the source reference voltage into a plurality of different reference voltages when the source reference voltage is input and may output the distributed reference voltage through the output terminal connected between the resistors.

For example, the reference voltage distribution part may include a first resistor connected to the voltage buffer to receive the source reference voltage and a second resistor having one side connected to the first resistor and the other side grounded and may include a first output terminal connected between the voltage buffer and the first resistor to output the first reference voltage and a second output terminal connected between the first resistor and the second resistor to output the second reference voltage lower than the first reference voltage.

In addition, when the first selection signal is input from the selection unit 100, the switch may connect the first output terminal of the voltage regulator to apply the first reference voltage to the current adjustment unit 220, and when the second selection signal is input from the selection unit 100, the switch may connect the third output terminal of the voltage regulator to apply the second reference voltage to the current adjustment unit 220.

Next, the current adjustment unit 220 may include a third switch circuit that is turned on/off in correspondence to the selection signal of the selection unit 100, and a fourth switch circuit that is turned on/off in correspondence to the first reference voltage or the second reference voltage. When the third switch circuit is turned on, and the fourth switch circuit is turned on, only some of the LEDs of the LED string unit 500 may be driven, and when the third switch circuit is turned off, and the fourth switch circuit is turned on, all of the LEDs of the LED string unit 500 may be driven.

For example, the third switch circuit may include an inverter that inverts the selection signal of the selection unit 100, and a second transistor that is connected to an output terminal of the inverter and is turned on when the first signal is input from the output terminal of the inverter and is turned off when the second signal is input from the output terminal of the inverter.

Here, the second transistor may include a gate terminal connected to the output terminal of the inverter, a drain terminal connected to the LED string unit 500, and a source terminal connected to a node between the LED string unit 500 and the fourth switching circuit.

In the second transistor, when the plurality of LEDs included in the LED string unit 500 are separated into the first group and the second group, the drain terminal may be connected to a node between the first group and the second group, and the source terminal may be connected to an end of the second group.

For example, the first group may include at least one LED and be disposed between the battery and the second group, and the second group may include at least one LED and be disposed between the first group and the ground.

In addition, the second transistor may be turned on when the first signal is input from the output terminal of the inverter to drive only the LEDs of the first group, or may be turned off when the second signal is input from the output terminal of the inverter to drive all the LEDs of the first and second groups.

Next, the fourth switch circuit may include an amplifier and a first transistor.

Here, the amplifier may include a first input terminal connected to the switch of the voltage adjustment unit 210 to receive the first reference voltage or the second reference voltage lower than the first reference voltage, a second input terminal connected to the ground, and an output terminal that outputs the first signal when the first reference voltage is input and outputs the second signal when the second reference voltage is input.

In addition, the first transistor may be connected to the output terminal of the amplifier and be maintained in the turn on state when the first signal or the second signal is input from the output terminal of the amplifier.

Here, the first transistor may include a gate terminal connected to the output terminal of the amplifier, a drain terminal connected to the LED string unit 500, and a source terminal connected to a node between the second input terminal of the amplifier and the ground.

For example, the drain terminal of the first transistor may be connected in series to the last LED disposed at the end of the LED string unit 500, and the source terminal of the second transistor of the third switch circuit may be connected to the node between the drain terminal of the first transistor and the LED string unit 500.

Next, the resistor may be disposed between the source terminal of the first transistor and the ground, and a resistance value of the resistor may be determined on the basis of the reference voltage of the current control driving unit 200.

For example, the resistance value R₁ of the resistor may be determined by a first equation expressed by I_{LED1} = V_{REF1}/R₁ (where R₁ is a resistance value, I_{LED1} is a current value flowing through each LED when only some of the LEDs in the LED string part are driven, and V_{REF1} is a first reference voltage value of the current control driving unit), and a second equation expressed by I_{LED2} = V_{REF2}/R₁ (where R₁ is a resistance value, I_{LED2} is a current value flowing through each LED when all of the LEDs in the LED string part are driven, and V_{REF2} is a second reference voltage value of the current control driving unit).

In addition, the first transistor may include a metal oxide semiconductor field effect transistor (MOSFET).

The current control driving unit 200 may control the current flowing through each LED so that the sum of the second LED power in correspondence to the driving of some LEDs is the same as the sum of the first LED power in correspondence to the driving of all the LEDs when the first selection signal corresponding to the first LED driving condition under which only some LEDs of the LED string unit 500 are driven is input from the selection unit 100.

Here, when controlling the current flowing through each LED 10, the current control driving unit 200 may adjust the current flowing through each LED on the basis of Equation expressed by P_{LED_SUM1} = P_{LED_SUM12} (where P_{LED_SUM1} is the sum of the first LED power corresponding to the driving of all the LEDs, and P_{LED_SUM2} is the sum of the second LED power corresponding to the driving of some LEDs), P_{LED_SUM1} = N × V_{LED} × I_{LED1} (where P_{LED_SUM1} is the sum of the power for the first LED, N is the total number of LEDs in the LED string unit, V_{LED} is a voltage value of each LED, and I_{LED1} is a current value of each LED), P_{LED_SUM2} = N-n × V_{LED} × I_{LED2} (where P_{LED_SUM2} is the sum of the second LED power, N is the total number of LEDs in the LED string unit, n is the number of LEDs that are turned off among the LEDs in the LED string unit, V_{LED} is a voltage value of each LED, and I_{LED2} is a current value of each LED).

As described above, according to the present disclosure, the LED voltage may be sensed to select the LED driving conditions, and the current flowing through each LED may be adjusted so that the sum of the LED power corresponding to some LED driving conditions and the sum of the LED power corresponding to all the LED driving are the same to prevent the brightness reduction by always uniformly maintaining the LED power regardless of the battery voltage.

FIG. 2 is a view for explaining the LED string unit of FIG. 1.

As illustrated in FIG. 2, in the present disclosure, the voltage flowing through the LED string unit 500 may be sensed to select the LED driving condition of the LED string unit 500 on the basis of the sensed voltage, and the LED current may be controlled so that some or all of the LEDs of the LED string unit 500 are driven in correspondence to the LED driving condition.

The LED string unit 500 may include a plurality of LEDs 10 that are connected in series and arranged in sequence and may include one LED string or a plurality of LED strings.

Here, the plurality of LEDs 10 may be driven by a voltage supplied from the battery 20 to emit light.

In addition, in the LED string unit 500, an input terminal of a first LED 10 of the plurality of LEDs 10 arranged in sequence may be connected to the battery 20, and an output terminal of the last LED 10 may be grounded 30.

For example, in the LED string unit 500, a first LED, a second LED, and a third LED may be connected in series to each other and be arranged sequentially.

Here, the input terminal of the first LED may be connected to the battery 20, an output terminal of the first LED may be connected to an input terminal of the second LED, an input terminal of the third LED may be connected to an output terminal of the second LED, and an output terminal of the third LED may be grounded 30.

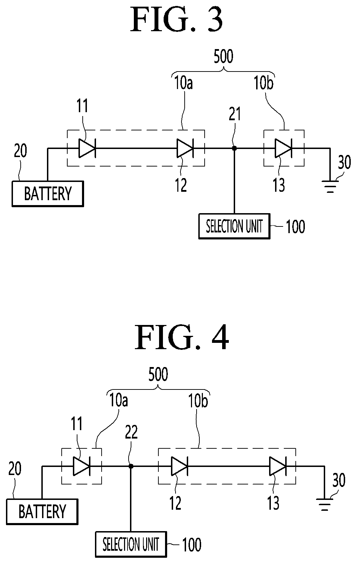

FIGS. 3 to 5 are views for explaining a node voltage sensing point of the LED string unit.

As illustrated in FIGS. 3 to 5, in the present disclosure, the selection unit 100 may sense the node voltage of the LED string unit 500, compare the sensed node voltage with the preset node reference voltage, and select the LED driving conditions on the basis of the comparison result.

Here, when sensing the node voltage, the selection unit 100 may sense the node voltage from the node between the first group 10a and the second group 10b when the plurality of LEDs included in the LED string unit 500 are separated into the first group 10a and the second group 10b.

For example, the first group 10a may include at least one LED and be disposed between the battery 20 and the second group 10b.

In addition, the second group 10b may include at least one LED and be disposed between the first group 10a and the ground 30.

Here, the selection unit 100 may output a first selection signal that drives only LEDs of the first group 10a or a second selection signal that drives all LEDs of the first and second groups 10b and 10b on the basis of the comparison result between the sensed node voltage and the preset node reference voltage.

In addition, when selecting the LED driving condition, the selection unit 100 may output the first selection signal that drives only some LEDs of the LED string unit 500 if the sensed node voltage is lower than the node reference voltage and may output the second selection signal that drives all the LEDs of the LED string unit 500 if the sensed node voltage is higher than the node reference voltage.

As described above, the selection unit 100 may output the first selection signal that turns off some LEDs and turns on the remaining LEDs when the sensed node voltage is lower than the voltage that drives all the LEDs, and may output the second selection signal that turns on all the LEDs when the sensed node voltage is higher than the voltage that drives all the LEDs.

Thus, it is preferable that the selection unit 100 selects a node between the LED group to be turned off and the LED group to be turned on as a voltage sensing point according to the node voltage.

As illustrated in FIGS. 3 to 5, in the LED string unit 500, when a first LED 11, a second LED 12, and a third LED 13 are connected in series to each other and sequentially arranged, the selection unit 100 of the present disclosure may set various node voltage sensing points of the LED string unit 500.

In an embodiment, as illustrated in FIG. 3, the selection unit 100 of the present disclosure may be connected to a first node 21 of a connection line between an output terminal of the second LED 12 and an input terminal of the third LED 13 and may sense a node voltage between the second LED 12 and the third LED 13 through the first node 21.

Here, the selection unit 100 of the present disclosure may select a voltage sensing point between the output terminal of the second LED 12 and the input terminal of the third LED 13 and may turn on the first LED 11 and the second LED 12 of the first group 10a and turn off the third LED 13 of the second group 10b on the basis of the voltage sensing point.

In another embodiment, as illustrated in FIG. 4, the selection unit 100 of the present disclosure may be connected to a second node 22 of a connection line between an output terminal of the first LED 11 and an input terminal of the second LED 12 and may sense a node voltage between the first LED 11 and the second LED 12 through the second node 22.

Here, the selection unit 100 of the present disclosure may select a voltage sensing point between the output terminal of the first LED 11 and the input terminal of the second LED 12 and may turn on the first LED 11 of the first group 10a and turn off the second LED 12 and the third LED 13 of the second group 10b on the basis of the voltage sensing point.

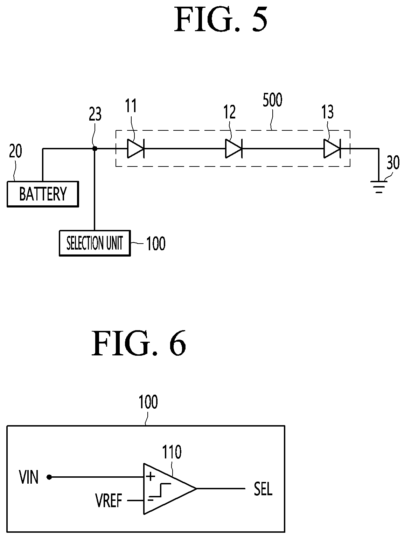

In another embodiment, as illustrated in FIG. 5, the selection unit 100 of the present disclosure may be connected to a third node 23 of a connection lines between the output terminal of the battery 20 and the input terminal of the first LED 11 and may sense a node voltage between the battery 20 and the first LED 11 through the third node 23.

Here, the selection unit 100 of the present disclosure may select a voltage sensing point between the input terminal of the battery 20 and the first LED 11, but the voltage sensing point may not be a reference point at which the LED of the first group 10a and the LED of the second group 10b are separated from each other to be turned on/off.

FIG. 6 is a view for explaining the selection unit of FIG. 1.

As illustrated in FIG. 6, the selection unit 100 of the present disclosure may include a comparator 110 including a first input terminal (+) into which a node voltage Vin of the LED string unit is input, a second input terminal (-) into which a preset node reference voltage V_{ref} is input, and an output terminal that outputs a selection signal SEL to the current control driving unit.

Here, the first input terminal (+) of the comparator 110 may be connected to the node between the first group and the second group when the plurality of LEDs included in the LED string unit are separated into the first group and the second group.

For example, the first input terminal (+) of the comparator 110 may be connected to the node between the second LED and the third LED when the first LED, the second LED, and the third LED are sequentially arranged from the battery in the LED string unit.

Here, the node reference voltage Vin of the selection unit 100 may be set on the basis of the battery voltage supplied at a time point at which some LEDs of the LED string unit are turned off when the battery voltage supplied to the LED string unit decreases.

As described above, the selection unit 100 may sense the node voltage Vin of the LED string unit, compare the sensed node voltage Vin with the preset node reference voltage V_{ref}, and select an LED driving condition on the basis of the comparison result.

Here, the selection unit 100 may output a first selection signal that drives only the LEDs of the first group or a second selection signal that drives all the LEDs of the first and second groups on the basis of the comparison result between the sensed node voltage Vin and the preset node reference voltage V_{ref}.

That is, when selecting the LED driving condition, the selection unit may output the first selection signal that drives only some LEDs 10 of the LED string unit if the sensed node voltage is lower than the node reference voltage, or may output the second selection signal that drives all the LEDs of the LED string unit if the sensed node voltage is higher than the node reference voltage.

The current control driving unit of the present disclosure may control current flowing through each LED so that the sum of LED power corresponding to driving some LEDs and the sum of LED power corresponding to driving all LEDs are the same.

This reason is to prevent brightness reduction by always uniformly maintaining the LED power regardless of the battery voltage.

As another embodiment, the current control driving unit may include a voltage adjustment unit that provides one of a plurality of reference voltages in correspondence to the selection signal of the selection unit, and a current adjustment unit that is switched in correspondence to the reference voltage input from the voltage adjustment unit to control the LED current so that some or all of the LEDs of the LED string unit are driven.

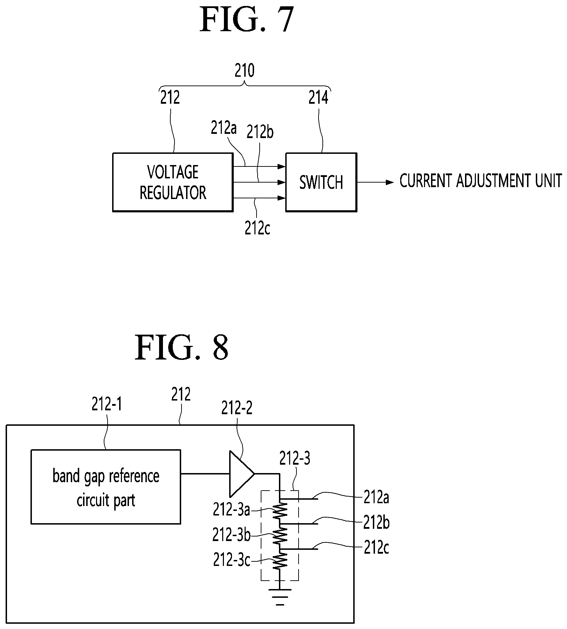

FIGS. 7 and 8 are views for explaining the voltage adjustment unit of FIG. 1.

As illustrated in FIG. 7, the voltage adjustment unit 210 may include a voltage regulator 212 and a switch 214.

For example, the voltage regulator 212 may provide a first reference voltage 212a, a second reference voltage 212b lower than the first reference voltage 212a, and a third reference voltage 212c lower than the second reference voltage 212b, and output the second reference voltage 212b to the current regulator.

In addition, the switch 214 may be switched to output the first reference voltage or the third reference voltage to the current adjustment unit in correspondence to the selection signal of the selection unit.

As illustrated in FIG. 8, the voltage regulator 212 may include a first output terminal that outputs a first reference voltage 212a, a second output terminal that outputs a second reference voltage 212b, and a third output terminal that outputs a third reference voltage 212c. The first output terminal and the third output terminal of the voltage regulator 212 may be connected to the switch 214, and the second output terminal of the voltage regulator may be connected to the current adjustment unit.

For example, the voltage regulator 212 may include a band gap reference circuit part 212-1 that generates a source reference voltage, a reference voltage distribution part 212-3 that distributes the source reference voltage into a plurality of different reference voltages, and a voltage buffer 212-2 connected between the band gap reference circuit part 212-1 and the reference voltage distribution part 212-3.

In addition, the reference voltage distribution part 212-3 may have a plurality of resistors connected in series to provide the source reference voltage by distributing the source reference voltage into a plurality of different reference voltages when the source reference voltage is input and may output the distributed reference voltage through the output terminal connected between the resistors.

For example, the reference voltage distribution part 212 may include a first resistor 212-3a connected to the voltage buffer 212-2 to receive the source reference voltage, a second resistor 212-3b connected to the first resistor 212-3a, and a third resistor 212-3c having one side connected to the second resistor 212-3b and the other side grounded, and may include a first output terminal connected between the voltage buffer 212-2 and the first resistor 212-3a to output the first reference voltage 212a, a second output terminal connected between the first resistor 212-3a and the second resistor 212-3b to output the second reference voltage 212b lower than the first reference voltage 212a, and a third reference voltage 212b connected between the second resistor 212-3b and the third resistor 212-3c to output the third reference voltage 212c lower than the second reference voltage 212b.

In addition, when the first selection signal is input from the selection unit, the switch 214 may connect the first output terminal of the voltage regulator 212 to the current adjustment unit to apply the first reference voltage 212a to the current adjustment unit, and when the second selection signal is input from the selection unit, the switch 214 may connect the third output terminal of the voltage regulator 212 to the current adjustment unit to apply the third reference voltage 212-3c to the current adjustment unit.

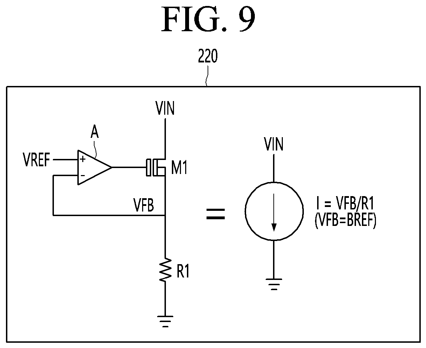

FIG. 9 is a view for explaining the current adjustment unit of FIG. 1.

The current adjustment unit 220 of the present disclosure may include a first switch circuit that is turned on/off in correspondence to the first reference voltage or the third reference voltage, and a second switch circuit that is turned off/on in correspondence to the on/off of the first switch circuit.

Here, the current adjustment unit 220 of the present disclosure may drive only some LEDs of the LED string unit when the first switch circuit is turned on, and the second switch circuit is turned off, and may drive all the LEDs of the LED string unit when the first switch circuit is turned off, and the second switch circuit is turned on.

As illustrated in FIG. 9, in the current adjustment unit 220 of the present disclosure, the switch circuit may include an amplifier A and a transistor M1.

For example, the amplifier A may include a first input terminal (+) into which the reference voltage V_{ref} is input, a second input terminal (-) connected to the ground, and an output terminal that outputs the first signal or the second signal according to the input reference voltage V_{ref}.

Here, the transistor M1 may be connected to the output terminal of the amplifier A and thus may be turned on when the first signal is input from the output terminal of the amplifier A, and may be turned off when the second signal is input from the output terminal of the amplifier A.

Here, the amplifier A may be regulated to a higher voltage among the voltage input to the first input terminal (+) and the voltage input to the second input terminal (-).

In addition, the transistor M1 may include a gate terminal connected to the output terminal of the amplifier A, a drain terminal connected to the LED string unit, and a source terminal connected to a node between the second input terminal (-) of the amplifier A and the ground.

Here, a resistor R₁ may be disposed between the source terminal of the transistor M1 and the ground, and a resistance value of the resistor R₁ may be determined on the basis of the reference voltage of the current control driving unit.

For example, the resistance value R₁ of the resistor R₁ may be determined by a first equation expressed by I_{LED1} = V_{REF1}/R₁ (where R₁ is a resistance value, I_{LED1} is a current value flowing through each LED when only some of the LEDs in the LED string part are driven, and V_{REF1} is a first reference voltage value of the current control driving unit), and a second equation expressed by I_{LED2} = V_{REF2}/R₁ (where R₁ is a resistance value, I_{LED2} is a current value flowing through each LED when all of the LEDs in the LED string part are driven, and V_{REF2} is a second reference voltage value of the current control driving unit).

In addition, the current I flowing between the source terminal of the transistor M1 and the ground may be determined by an equation expressed by I = V_{fb}/R₁, V_{fb} = V_{ref} (wherein V_{fb} is a feedback voltage flowing between the node between the source terminal of the transistor M1 and the ground and the second input terminal (-) of the amplifier A, R₁ is a resistance value of the resistor R₁, and V_{ref} is a reference voltage input to the first input terminal (+) of the amplifier A).

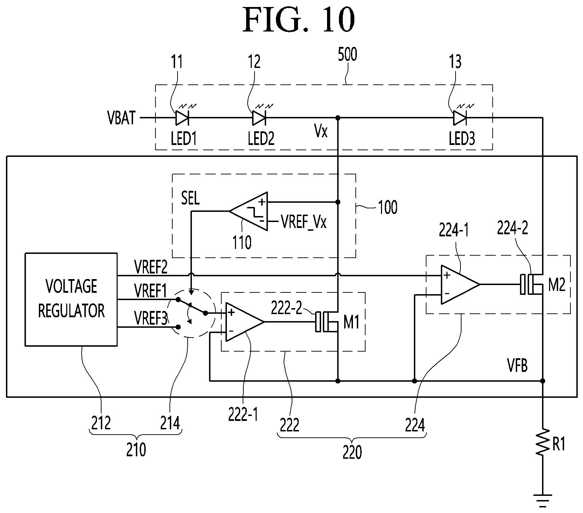

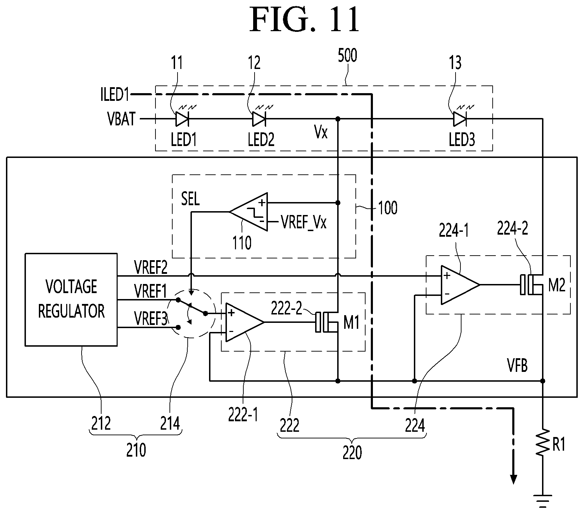

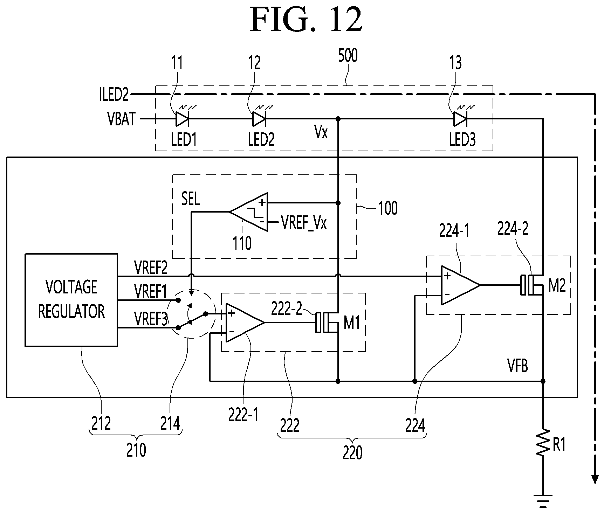

FIG. 10 is a circuit diagram for explaining an LED driving device according to a first embodiment of the present disclosure, and FIGS. 11 and 12 are circuit diagrams for explaining a circuit operation of the LED driving device according to the first embodiment of the present disclosure.

As illustrated in FIG. 10, an LED driving device according to a first embodiment of the present disclosure may include a selection unit 100 that senses a voltage flowing through an LED string unit 500 to select an LED driving condition of the LED string unit 500 on the basis of the sensed voltage, and a current control driving unit 200 that controls LED current so that some or all of the LEDs of the LED string unit 500 are driven to correspond to the LED driving condition of the selection unit 100.

Here, the LED string unit 500 may include a plurality of LEDs that are connected in series and arranged in sequence and may include one LED string or a plurality of LED strings.

Here, the plurality of LEDs may be driven to emit light by a voltage VBAT supplied from a battery.

For example, in the LED string unit 500, a first LED 11, a second LED 12, and a third LED 13 may be connected in series to each other and be arranged sequentially.

Here, the selection unit 100 may be connected to a node of a connection line between an output terminal of the second LED 12 and an input terminal of the third LED 13 and may sense a node voltage Vx between the second LED 12 and the third LED 13 through the node.

The selection unit 100 may sense the node voltage Vx of the LED string unit 500, compare the sensed node voltage Vx with a preset node reference voltage V_{REF_Vx}, and select the LED driving conditions on the basis of the comparison result.

Here, when sensing the node voltage Vx, the selection unit 100 may sense the node voltage from a node between a first group and a second group if the plurality of LEDs included in the LED string unit 500 are separated into the first group and the second group.

Here, the selection unit 100 may output a first selection signal that drives only the LEDs of the first group or a second selection signal that drives all the LEDs of the first and second groups on the basis of the comparison result between the sensed node voltage Vx and the preset node reference voltage V_{REF_Vx}.

That is, when selecting the LED driving condition, the selection unit 100 may output the first selection signal that drives only some LEDs 10 of the LED string unit 500 if the sensed node voltage Vx is lower than the node reference voltage V_{REF_Vx}, or may output the second selection signal that drives all the LEDs of the LED string unit 500 if the sensed node voltage Vx is higher than the node reference voltage V_{REF_Vx}.

As described above, the selection unit 100 may output the first selection signal that turns off some LEDs and turns on the remaining LEDs when the sensed node voltage is lower than the voltage that drives all the LEDs, and may output the second selection signal that turns on all the LEDs when the sensed node voltage is higher than the voltage that drives all the LEDs.

Thus, it is preferable that the selection unit 100 selects a node between the LED group to be turned off and the LED group to be turned on as a voltage sensing point according to the node voltage.

In addition, the selection unit 100 may include a comparator 110 including a first input terminal into which the node voltage of the LED string unit 500 is input, a second input terminal into which the preset node reference voltage is input, and an output terminal that outputs the selection signal to the current control driving unit.

The current control driving unit may include a voltage adjustment unit 210 that provides one of a plurality of reference voltages in correspondence to the selection signal of the selection unit 100, and a current adjustment unit 220 that is switched in correspondence to the reference voltage input from the voltage adjustment unit 210 to adjust the LED current so that some or all of the LEDs of the LED string unit 500 are driven.

Here, the voltage adjustment unit 210 may include a voltage regulator 212 and a switch 214.

For example, the voltage regulator 212 may provide a first reference voltage V_{REF1}, a second reference voltage V_{REF2} lower than the first reference voltage V_{REF1}, and a third reference voltage VREF3 lower than the second reference voltage V_{REF2} and may output the second reference voltage V_{REF2} to the current regulator 220, and the switch 214 may be switched to output the first reference voltage V_{REF1} or the third reference voltage VREF3 to the current regulator 220 in correspondence to the selection signal of the selection unit 100.

The voltage regulator 212 may include a first output terminal that outputs a first reference voltage V_{REF1}, a second output terminal that outputs a second reference voltage V_{REF2}, and a third output terminal that outputs a third reference voltage V_{REF3}. The first output terminal V_{REF1} and the third output terminal V_{REF3} of the voltage regulator may be connected to the switch 214, and the second output terminal of the voltage regulator 212 may be connected to the current adjustment unit 220.

In addition, when the first selection signal is input from the selection unit 100, the switch 214 may connect the first output terminal of the voltage regulator 212 to the current adjustment unit 220 to apply the first reference voltage V_{REF1} to the current adjustment unit 220, and when the second selection signal is input from the selection unit 100, the switch 214 may connect the third output terminal of the voltage regulator 212 to the current adjustment unit 220 to apply the third reference voltage V_{REF3} to the current adjustment unit 220.

Next, the current adjustment unit 220 may include a first switch circuit 222 that is turned on/off in correspondence to the first reference voltage V_{REF1} or the third reference voltage V_{REF3}, and a second switch circuit 224 that is turned off/on in correspondence to the on/off of the first switch circuit 222. When the first switch circuit 222 is turned on, and the second switch circuit 224 is turned off, only some of the LEDs of the LED string unit 500 may be driven, and when the first switch circuit 222 is turned off, and the second switch circuit 224 is turned on, all of the LEDs of the LED string unit 500 may be driven.

Here, the first switch circuit 222 may include a first amplifier 222-1 and a first transistor 222-2.

For example, the first amplifier 222-1 may include a first input terminal connected to the switch 214 to receive the first reference voltage V_{REF1} or the third reference voltage V_{REF3}, a second input terminal connected to the ground, and an output terminal that outputs the first signal when the first reference voltage V_{REF1} is input, and the second signal when the third reference voltage V_{REF3} is input, and the first transistor 222-2 may be connected to the output terminal of the first amplifier 222-1 and be turned on when the first signal is input from the output terminal of the first amplifier 222-1 and be turned off when the second signal is input from the output terminal of the first amplifier 222-1.

Here, the first amplifier 222-1 may be regulated to a higher voltage among the voltages input to the first input terminal and the voltage input to the second input terminal.

In addition, the first transistor 222-2 may include a gate terminal connected to the output terminal of the first amplifier 222-1, a drain terminal connected to the LED string unit 500, and a source terminal connected to a node between the second input terminal of the first amplifier 222-1 and the ground.

Here, a resistor R₁ may be disposed between the source terminal of the first transistor 222-2 and the ground, and a resistance value of the resistor R₁ may be determined on the basis of the reference voltage of the current control driving unit.

For example, the resistance value R₁ of the resistor R₁ may be determined by a first equation expressed by I_{LED1} = V_{REF1}/R₁ (where R₁ is a resistance value, I_{LED1} is a current value flowing through each LED when only some of the LEDs in the LED string part are driven, and V_{REF1} is a first reference voltage value of the current control driving unit), and a second equation expressed by I_{LED2} = V_{REF2}/R₁ (where R₁ is a resistance value, I_{LED2} is a current value flowing through each LED when all of the LEDs in the LED string part are driven, and V_{REF2} is a second reference voltage value of the current control driving unit).

Next, the first transistor 222-2 may be connected in parallel to the comparator 110 of the selection unit 100, and the drain terminal of the first transistor 222-2 and the input terminal of the comparator 110 of the selection unit 100 may be connected to the same node between the LEDs of the LED string unit 500.

For example, the first transistor 222-2 may include a metal oxide semiconductor field effect transistor (MOSFET).

Next, the second switch circuit 224 may include a second amplifier 224-1 and a second transistor 224-2.

Here, the second amplifier 224-1 may include a first input terminal connected to the voltage regulator 212 to receive the second reference voltage V_{REF2}, a second input terminal connected to the first switch circuit 222 to receive the first reference voltage V_{REF1} or the third reference voltage V_{REF3}, and an output terminal configured to output a first signal when the second reference voltage V_{REF2} and the third reference voltage V_{REF3} lower than the second reference voltage V_{REF2} are input and to output a second signal when the second reference voltage V_{REF2} and the first reference voltage V_{REF1} higher than the second reference voltage V_{REF2} are input, and the second transistor 224-2 may be connected to the output terminal of the second amplifier 224-1 and may be turned on when the first signal is input from the output terminal of the second amplifier 224-1 and turned off when the second signal is input from the output terminal of the second amplifier 224-1.

Here, the second amplifier 224-1 may be regulated to a higher voltage among the voltages input to the first input terminal and the voltage input to the second input terminal.

In addition, the second transistor 224-2 may include a gate terminal connected to the output terminal of the second amplifier 224-1, a drain terminal connected to the LED string unit 500, and a source terminal connected to a node between the second input terminal of the second amplifier 224-1 and the ground.

Here, the drain terminal of the second transistor 224-2 may be connected in series to the last LED at an end of the LED string unit 500.

Here, a resistor R₁ may be disposed between the source terminal of the second transistor 224-2 and the ground, and a resistance value of the resistor R₁ may be determined on the basis of the reference voltage of the current control driving unit.

For example, the resistance value R₁ of the resistor R₁ may be determined by a first equation expressed by I_{LED1} = V_{REF1}/R₁ (where R₁ is a resistance value, I_{LED1} is a current value flowing through each LED when only some of the LEDs in the LED string part are driven, and V_{REF1} is a first reference voltage value of the current control driving unit), and a second equation expressed by I_{LED2} = V_{REF2}/R₁ (where R₁ is a resistance value, I_{LED2} is a current value flowing through each LED when all of the LEDs in the LED string part are driven, and V_{REF2} is a second reference voltage value of the current control driving unit).

Next, the first amplifier 222-1 and the first transistor 222-2 of the first switch circuit 222, and the second amplifier 224-1 of the second switch circuit 224 may be connected in parallel to each other at the node between the source terminal of the second transistor 224-2 and the resistor R₁.

For example, the second transistor 224-2 may include a metal oxide semiconductor field effect transistor (MOSFET).

As described above, the current control driving unit including the voltage adjustment unit 210 and the current adjustment unit 220 may control the current flowing through each LED so that the sum of the second LED power in correspondence to the driving of some LEDs is the same as the sum of the first LED power in correspondence to the driving of all the LEDs when the first selection signal corresponding to the first LED driving condition under which only some LEDs of the LED string unit 500 are driven is input from the selection unit 100.

Here, when controlling the current flowing through each LED, the current control driving unit may adjust the current flowing through each LED on the basis of Equation expressed by P_{LED_SUM1} = P_{LED_SUM12} (where P_{LED_SUM1} is the sum of the first LED power corresponding to the driving of all the LEDs, and P_{LED_SUM2} is the sum of the second LED power corresponding to the driving of some LEDs), P_{LED_SUM1} = N × V_{LED} × I_{LED1} (where P_{LED_SUM1} is the sum of the power for the first LED, N is the total number of LEDs in the LED string unit, V_{LED} is a voltage value of each LED, and I_{LED1} is a current value of each LED), P_{LED_SUM2} = N-n × V_{LED} × I_{LED2} (where P_{LED_SUM2} is the sum of the second LED power, N is the total number of LEDs in the LED string unit, n is the number of LEDs that are turned off among the LEDs in the LED string unit, V_{LED} is a voltage value of each LED, and I_{LED2} is a current value of each LED).

As illustrated in FIG. 11, the selection unit 100 of the present disclosure may sense a voltage flowing through the LED string unit 500 and output a first selection signal that drives only some LEDs of the LED string unit 500 when a sensed node voltage Vx is lower than the node reference voltage V_{REF_Vx}.

In addition, the voltage adjustment unit 210 of the present disclosure may be switched in correspondence to the first selection signal of the selection unit 100 to provide a first reference voltage V_{REF1} having the highest voltage among a plurality of reference voltages to the first switch circuit 222 of the current adjustment unit 220 and provide a second reference voltage V_{REF2} having a lower voltage than the first reference voltage V_{REF1} to the second switch circuit 224 of the current adjustment unit 220.

Next, the current adjustment unit 220 of the present disclosure may turn on the first switch circuit 222 and turn off the second switch circuit 224 because the first reference voltage V_{REF1} is greater than the second reference voltage V_{REF2}.

Thus, a first LED current I_{LED1} of the LED string unit 500 may generate a first current path flowing through the first switch circuit 222 of the current adjustment unit 220, and thus, only some of the LEDs, which include the first LED 11 and the second LED 12, among the LEDs of the LED string unit 500 may be driven.

Here, the first LED current I_{LED1} may be calculated by an equation expressed by first LED current I_{LED1} = first reference voltage V_{REF1}/resistance R₁.

In the present disclosure, the current flowing through each LED may be adjusted so that the sum of the second LED power corresponding to the driving of some LEDs is the same as the sum of the first LED power corresponding to the driving of all the LEDs to always uniformly maintain the LED power regardless of the battery voltage, thereby preventing brightness reduction.

That is, in the present disclosure, the sum of LED power that drives all three LEDs and the sum of LED power that drives only two LEDs may be maintained to be the same.

In addition, as illustrated in FIG. 12, the selection unit 100 of the present disclosure may sense a voltage flowing through the LED string unit 500 and output a second selection signal that drives all the LEDs of the LED string unit 500 when a sensed node voltage Vx is greater than the node reference voltage V_{REF_Vx}.

In addition, the voltage adjustment unit 210 of the present disclosure may be switched in correspondence to the second selection signal of the selection unit 100 to provide a third reference voltage V_{REF3} having the lowest voltage among a plurality of reference voltages to the first switch circuit 222 of the current adjustment unit 220 and provide a second reference voltage V_{REF2} having a higher voltage than the third reference voltage V_{REF1} to the second switch circuit 224 of the current adjustment unit 220.

Next, the current adjustment unit 220 of the present disclosure may turn off the first switch circuit 222 and turn on the second switch circuit 224 because the third reference voltage V_{REF3} is lower than the second reference voltage V_{REF2}.

Thus, a second LED current I_{LED2} of the LED string unit 500 may generate a second current path flowing through the second switch circuit 222 of the current adjustment unit 220, and thus, all the LEDs including the first LED 11, the second LED 12, and the third LED 13 may be driven.

Here, the second LED current I_{LED2} may be calculated by an equation expressed by second LED current I_{LED2} = second reference voltage V_{REF2}/resistance R₁.

As described above, in the present disclosure, the sum of LED power that drives all three LEDs and the sum of LED power that drives only two LEDs may be maintained to be the same.

The sum of the LED power PLED_SUM may be calculated by an equation expressed by PLED_SUM = 3 × V_{LED} × I_{LED2} = 2 × V_{LED} × I_{LED1} (where PLED_SUM is the sum of the LED power, 3 and 2 are the number of LEDs to be driven, V_{LED} is a voltage value of the LED, I_{LED1} is a current value at which two LEDs are driven, and I_{LED2} is a current value at which three LEDs are driven).

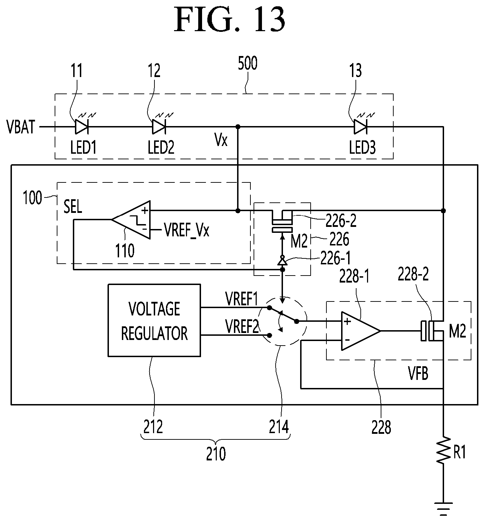

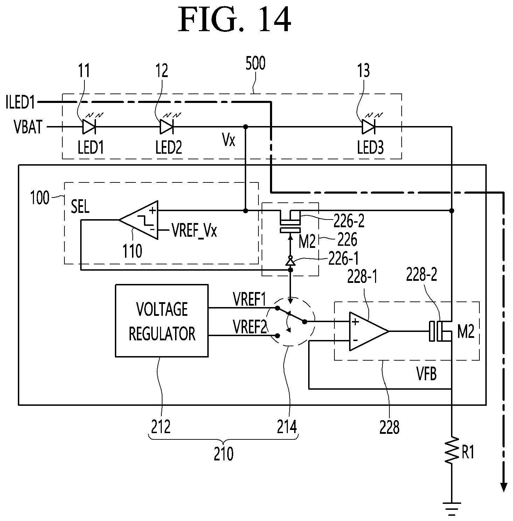

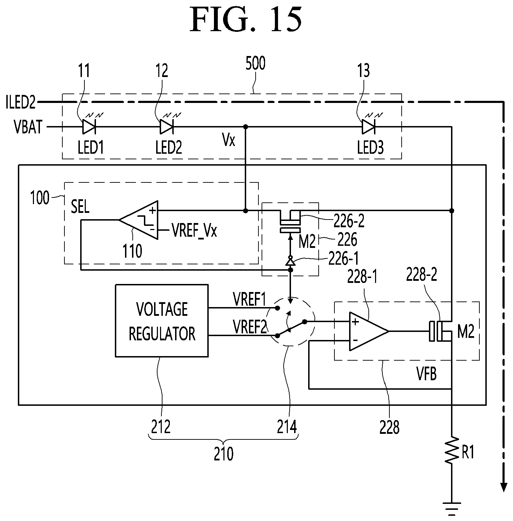

FIG. 13 is a circuit diagram for explaining an LED driving device according to a second embodiment of the present disclosure, and FIGS. 14 and 15 are circuit diagrams for explaining a circuit operation of the LED driving device according to the second embodiment of the present disclosure.

As illustrated in FIG. 13, an LED driving device according to a second embodiment of the present disclosure may include a selection unit 100 that senses a voltage flowing through an LED string unit 500 to select an LED driving condition of the LED string unit 500 on the basis of the sensed voltage, and a current control driving unit that controls the LED current so that some or all of the LEDs of the LED string unit 500 are driven to correspond to the LED driving condition of the selection unit 100.

The LED driving device according to the second embodiment of the present disclosure is the same as the LED driving device according to the first embodiment of the present disclosure, except that the circuit configuration of the current control driving unit is different, and thus, descriptions of the duplicated circuit configurations will be omitted, and only the circuit configuration of the current control driving unit will be described.

As illustrated in FIG. 13, the current control driving unit according to the second embodiment of the present disclosure may include a voltage adjustment unit 210 that provides one of a plurality of reference voltages in correspondence to the selection signal of the selection unit 100, a third switch circuit 226 and a fourth switch circuit 228 of a current adjustment unit that is switched in correspondence to the reference voltage input from the voltage adjustment unit 210 to adjust the LED current so that some or all of the LEDs of the LED string unit 500 are driven.

Here, the voltage adjustment unit 210 may include a voltage regulator 212 that provides a first reference voltage V_{REF1} and a second reference voltage V_{REF2} that is lower than the first reference voltage V_{REF1}, and a switch 214 that is switched to output the first reference voltage V_{REF1} or the second reference voltage V_{REF2} to the fourth switch circuit 228 of the current adjustment unit in correspondence to the selection signal of the selection unit 100.

Here, the voltage regulator 212 may include a first output terminal that outputs the first reference voltage V_{REF1} and a second output terminal that outputs the second reference voltage V_{REF2}, and the first output terminal and the second output terminal of the voltage regulator 212 may be connected to the switch 214.

For example, the voltage regulator 212 may include a band gap reference circuit part that generates a source reference voltage, a reference voltage distribution part that distributes the source reference voltage into a plurality of different reference voltages, and a voltage buffer connected between the band gap reference circuit part and the reference voltage distribution part.

In addition, the reference voltage distribution part may have a plurality of resistors connected in series to provide the source reference voltage by distributing the source reference voltage into a plurality of different reference voltages when the source reference voltage is input and may output the distributed reference voltage through the output terminal connected between the resistors.

In addition, when the first selection signal is input from the selection unit 100, the switch 214 may connect the first output terminal of the voltage regulator 212 to apply the first reference voltage V_{REF1} to the fourth switch circuit 228 of the current adjustment unit, and when the second selection signal is input from the selection unit 100, the switch 214 may connect the third output terminal of the voltage regulator 212 to apply the second reference voltage V_{REF2} to the fourth switch circuit 228 of the current adjustment unit.

Next, the current adjustment unit may include the third switch circuit 226 that is turned on/off in correspondence to the selection signal of the selection unit 100, and the fourth switch circuit 228 that is turned on/off in correspondence to the first reference voltage V_{REF1} or the second reference voltage V_{REF2}. When the third switch circuit 226 is turned on, and the fourth switch circuit 228 is turned on, only some of the LEDs of the LED string unit 500 may be driven, and when the third switch circuit 226 is turned off, and the fourth switch circuit 228 is turned on, all of the LEDs of the LED string unit 500 may be driven.

For example, the third switch circuit 226 may include an inverter 226-1 that inverts the selection signal of the selection unit 100, and a second transistor 226-2 that is connected to an output terminal of the inverter 226-1 so as to be turned on when the first signal is input from the output terminal of the inverter 226-1, and to be turned off when the second signal is input from the output terminal of the inverter 226-1.

Here, the second inverter 226-2 may include a gate terminal connected to the output terminal of the inverter 226-1, a drain terminal connected to the LED string unit 500, and a source terminal connected to a node (228) between the LED string unit 500 and the fourth switching circuit 228.

In the second transistor 226-2, when the plurality of LEDs included in the LED string unit 500 are separated into a first group and a second group, the drain terminal may be connected to a node between the first group and the second group, and the source terminal may be connected to an end of the second group.

For example, the first group may include at least one LED and be disposed between the battery and the second group, and the second group may include at least one LED and be disposed between the first group and the ground.

In addition, the second transistor 226-2 may be turned on when the first signal is input from the output terminal of the inverter 226-1 to drive only the LEDs of the first group, or may be turned off when the second signal is input from the output terminal of the inverter 226-1 to drive all the LEDs of the first and second groups.

Next, the fourth switch circuit 228 may include an amplifier 228-1 and a first transistor 228-2.

Here, the amplifier 228-1 may include a first input terminal connected to the switch 214 of the voltage adjustment unit 210 to receive the first reference voltage V_{REF1} or the second reference voltage V_{REF2} lower than the first reference voltage V_{REF1}, a second input terminal connected to the ground, and an output terminal that outputs the first signal when the first reference voltage V_{REF1} is input and outputs the second signal when the second reference voltage V_{REF2} is input.

In addition, the first transistor 228-2 may be connected to the output terminal of the amplifier 228-1 and be maintained in the turn on state when the first signal or the second signal is input from the output terminal of the amplifier 228-1.

Here, the first transistor 228-2 may include a gate terminal connected to the output terminal of the amplifier 228-1, a drain terminal connected to the LED string unit 500, and a source terminal connected to a node between the second input terminal of the amplifier 228-1 and the ground.

For example, the drain terminal of the first transistor 228-2 may be connected in series to the last LED disposed at the end of the LED string unit 500, and the source terminal of the second transistor 226-2 of the third switch circuit 226 may be connected to the node between the drain terminal of the first transistor 228-2 and the LED string unit 500.

Next, a resistor R₁ may be disposed between the source terminal of the first transistor 228-2 and the ground, and a resistance value of the resistor R₁ may be determined on the basis of the reference voltage of the current control driving unit.

For example, the resistance value R₁ of the resistor may be determined by a first equation expressed by I_{LED1} = V_{REF1}/R₁ (where R₁ is a resistance value, I_{LED1} is a current value flowing through each LED when only some of the LEDs in the LED string part are driven, and V_{REF1} is a first reference voltage value of the current control driving unit), and a second equation expressed by I_{LED2} = V_{REF2}/R₁ (where R₁ is a resistance value, I_{LED2} is a current value flowing through each LED when all of the LEDs in the LED string part are driven, and V_{REF2} is a second reference voltage value of the current control driving unit).

In addition, the first transistor 228-2 may include a metal oxide semiconductor field effect transistor (MOSFET).

As illustrated in FIG. 14, the selection unit 100 of the present disclosure may sense a voltage flowing through the LED string unit 500 and output a first selection signal that drives only some LEDs of the LED string unit 500 when a sensed node voltage Vx is lower than the node reference voltage V_{REF_Vx}.

In addition, the voltage adjustment unit 210 of the present disclosure may be switched in correspondence to the first selection signal of the selection unit 100 to provide the first reference voltage V_{REF1} greater than the second reference voltage V_{REF2} among the plurality of reference voltages to the fourth switch circuit 228 of the current adjustment unit.

Next, the current adjustment unit of the present disclosure may turn on the third switch circuit 226 in correspondence to the first selection signal of the selection unit 100 and turn on the fourth switch circuit 228 in correspondence to the first reference voltage V_{REF1} provided from the voltage adjustment unit 210.

Thus, the first LED current I_{LED1} of the LED string unit 500 may generate a first current path flowing through the third switch circuit 226 and the fourth switch circuit 228 of the current adjustment unit, and thus, only some of the LEDs, which include the first LED 11 and the second LED 12, among the LEDs of the LED string unit 500 may be driven.

Here, the first LED current I_{LED1} may be calculated by an equation expressed by first LED current I_{LED1} = first reference voltage V_{REF1}/resistance R₁.

In the present disclosure, the current flowing through each LED may be adjusted so that the sum of the second LED power corresponding to the driving of some LEDs is the same as the sum of the first LED power corresponding to the driving of all the LEDs to always uniformly maintain the LED power regardless of the battery voltage, thereby preventing brightness reduction.

That is, in the present disclosure, the sum of LED power that drives all three LEDs and the sum of LED power that drives only two LEDs may be maintained to be the same.

In addition, as illustrated in FIG. 15, the selection unit 100 of the present disclosure may sense a voltage flowing through the LED string unit 500 and output a second selection signal that drives all the LEDs of the LED string unit 500 when a sensed node voltage Vx is greater than the node reference voltage V_{REF_Vx}.

In addition, the voltage adjustment unit 210 of the present disclosure may be switched in correspondence to the second selection signal of the selection unit 100 to provide the second reference voltage V_{REF2} lower than the first reference voltage V_{REF1} among the plurality of reference voltages to the fourth switch circuit 228 of the current adjustment unit.

Next, the current adjustment unit of the present disclosure may turn off the third switch circuit 226 in correspondence to the first selection signal of the selection unit 100 and turn on the fourth switch circuit 228 in correspondence to the second reference voltage V_{REF2} provided from the voltage adjustment unit 210.

Thus, a second LED current I_{LED2} of the LED string unit 500 may generate a second current path flowing through the fourth switch circuit 228 of the current adjustment unit, and thus, all the LEDs including the first LED 11, the second LED 12, and the third LED 13 may be driven.

Here, the second LED current I_{LED2} may be calculated by an equation expressed by second LED current I_{LED2} = second reference voltage V_{REF2}/resistance R₁.

As described above, in the present disclosure, the sum of LED power that drives all three LEDs and the sum of LED power that drives only two LEDs may be maintained to be the same.

The sum of the LED power PLED_SUM may be calculated by an equation expressed by PLED_SUM = 3 × V_{LED} × I_{LED2} = 2 × V_{LED} × I_{LED1} (where PLED_SUM is the sum of the LED power, 3 and 2 are the number of LEDs to be driven, V_{LED} is a voltage value of the LED, I_{LED1} is a current value at which two LEDs are driven, and I_{LED2} is a current value at which three LEDs are driven).

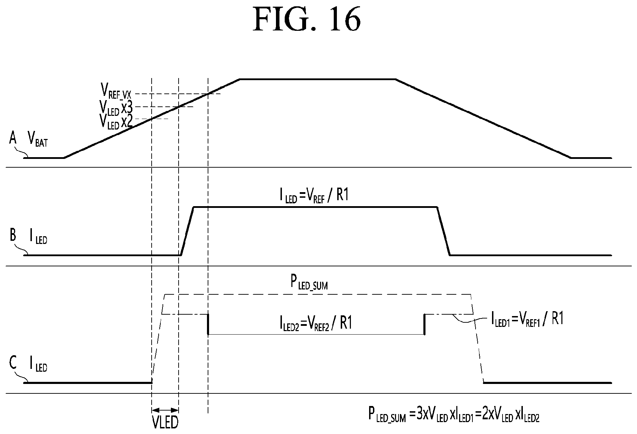

FIG. 16 is a graph illustrating a change in LED current according to a battery voltage of the present disclosure.

As illustrated in FIG. 16, a graph A is a graph showing a battery voltage applied to an LED string over time, a graph B is a graph showing LED current flowing through the LED string over time when an LED driving method of the present disclosure is not applied, and a graph C is a graph showing a battery voltage applied to the LED string over time when the LED driving method of the present disclosure is applied.

In the present disclosure, the sum of LED power that drives all three LEDs and the sum of LED power that drives only two LEDs may be maintained to be the same.

In the case in which only two LEDs are partially driven, the LED current may be adjusted to the first LED current I_{LED1} on the basis of the first reference voltage V_{REF1} which is greater than the second reference voltage V_{REF2}.

Here, the first LED current I_{LED1} may be calculated by an equation expressed by first LED current I_{LED1} = first reference voltage V_{REF1}/resistance R₁.

In the case in which all three LEDs are driven, the LED current may be adjusted to the second LED current I_{LED2} on the basis of the second reference voltage V_{REF2} that is lower than the first reference voltage V_{REF1}.

Here, the second LED current I_{LED2} may be calculated by an equation expressed by second LED current I_{LED2} = second reference voltage V_{REF2}/resistance R₁.

Thus, the sum of the LED power PLED_SUM may be calculated by an equation expressed by PLED_SUM = 3 × V_{LED} × I_{LED2} = 2 × V_{LED} × I_{LED1} (where PLED_SUM is the sum of the LED power, 3 and 2 are the number of LEDs to be driven, V_{LED} is a voltage value of the LED, I_{LED1} is a current value at which two LEDs are driven, and I_{LED2} is a current value at which three LEDs are driven).

In contrast, if the LED driving method of the present disclosure is not applied, as shown in the graph B, a problem in which brightness of the LEDs decreases as the battery voltage decreases and the LED current decreases may occur.

However, in the case of the present disclosure, as in the graph C, when the battery voltage is abnormally low, the LED current may be adjusted to be high so as to drive only some of the LEDs, and when the battery voltage is maintained normally, the LED current may be adjusted normally to drive all the LEDs.

As described above, in the present disclosure, the brightness reduction may be prevented by always uniformly maintaining the LED power regardless of the battery voltage.

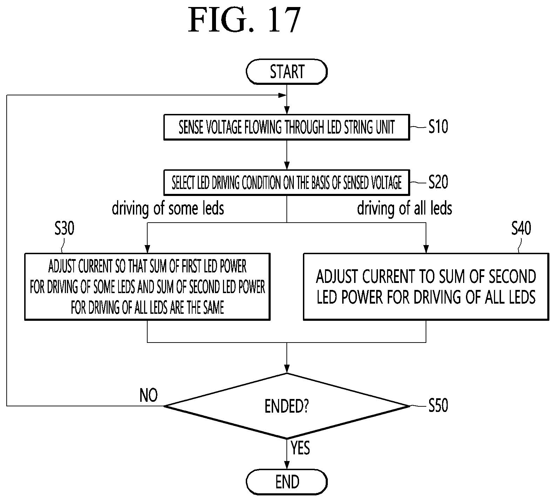

FIG. 17 is a flowchart for explaining an LED driving method of the present disclosure.

As illustrated in FIG. 17, the present disclosure may sense a voltage flowing in an LED string unit (S10).

Here, the present disclosure may sense a node voltage of the LED string unit, compare the sensed node voltage with a preset node reference voltage, and select an LED driving condition on the basis of the comparison result.

For example, in the present disclosure, when the plurality of LEDs included in the LED string unit are separated into a first group and a second group, a node voltage may be sensed from a node between a first group and a second group.

In addition, in the present disclosure, the LED driving condition of the LED string unit may be selected on the basis of the sensed voltage (S20).

Here, in the present disclosure, the LED driving condition that outputs a first selection signal that drives only the first group of LEDs or a second selection signal that drives all the LEDs of the first and second groups may be selected on the basis of the comparison result between the sensed node voltage and the preset node reference voltage.

For example, in the present disclosure, a first selection signal that drives only some LEDs in the LED string unit when the sensed node voltage is less than the node reference voltage may be output, and a second selection signal that drives all the LEDs in the LED string unit when the sensed node voltage is greater than the node reference voltage may be output.

Next, in the present disclosure, the LED current may be controlled so that some or all of the LEDs in the LED string unit are driven in correspondence to the LED driving condition (S30 and S40).

Here, in the present disclosure, the current flowing through each LED may be controlled so that, when controlling the LED current to drive some LEDs of the LED string unit, the sum of LED power corresponding to the driving of some LEDs and the sum of LED power corresponding to the driving of all the LEDs are the same (S30).

In addition, in the present disclosure, when controlling the LED current that drives all the LEDs in the LED string unit, the current flowing through each LED may be adjusted to the sum of LED power corresponding to the driving of all the LEDs (S40).

As described above, in the present disclosure, the current flowing through each LED may be controlled so that, when the first selection signal corresponding to the first LED driving condition under which only some LEDs of the LED string unit is input, the sum of the second LED power corresponding to the driving of some LEDs is equal to the sum of the first LED power corresponding to the driving of all the LEDs.

For example, in the present disclosure, when controlling the current flowing through each LED, the current control driving unit may adjust the current flowing through each LED on the basis of Equation expressed by P_{LED_SUM1} = P_{LED_SUM12} (where P_{LED_SUM1} is the sum of the first LED power corresponding to the driving of all the LEDs, and P_{LED_SUM2} is the sum of the second LED power corresponding to the driving of some LEDs),

P_{LED_SUM1} = N × V_{LED} × I_{LED1} (where P_{LED_SUM1} is the sum of the power for the first LED, N is the total number of LEDs in the LED string unit, V_{LED} is a voltage value of each LED, and I_{LED1} is a current value of each LED),

P_{LED_SUM2} = N-n × V_{LED} × I_{LED2} (where P_{LED_SUM2} is the sum of the second LED power, N is the total number of LEDs in the LED string unit, n is the number of LEDs that are turned off among the LEDs in the LED string unit, V_{LED} is a voltage value of each LED, and I_{LED2} is a current value of each LED).

Next, in the present disclosure, whether the LED operation is terminated (S50) may be confirmed, and when the operation is ended, all operations may be terminated.

As described above, according to the present disclosure, the LED voltage may be sensed to select the LED driving conditions, and the current flowing through each LED may be adjusted so that the sum of the LED power corresponding to some LED driving conditions and the sum of the LED power corresponding to all the LED driving are the same to prevent the brightness reduction by always uniformly maintaining the LED power regardless of the battery voltage.

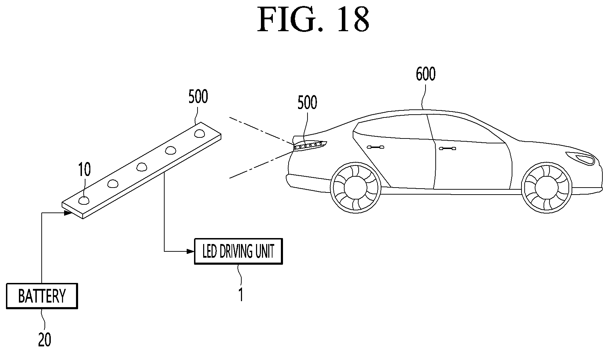

FIG. 18 is a view for explaining an LED lighting device of the present disclosure.

As illustrated in FIG. 18, in the present disclosure, an LED lighting device 500 of a vehicle 600 may be applied.

Here, the LED lighting device 500 may be applied to a rear combination lamp of the vehicle 600, but this is only an example and is not limited thereto.

The LED lighting device 500 may include an LED string unit 500 to which a plurality of LEDs 10 are connected, a battery unit 20 that supplies a voltage to the LED string unit 500, and an LED driving unit 1 that drives some or all of the LEDs of the LED string unit 500.

Here, the voltage flowing through the LED string unit 500 may be sensed to select an LED driving condition of the LED string unit 500 on the basis of the sensed voltage, and LED current may be controlled so that some or all of the LEDs of the LED string unit 500 are driven in correspondence to the LED driving condition.

In addition, the current flowing through each LED may be adjusted so that, when driving some of the LEDs of the LED string unit 500, the sum of LED power corresponding to driving some LEDs and the sum of LED power corresponding to driving all LEDs are the same.

The above-described present disclosure may be implemented as a computer-readable code on a computer-readable medium in which a program is stored. The computer readable recording medium includes all types of recording devices in which data readable by a computer system is stored. Examples of the computer-readable recording medium include hard disk drives (HDD), solid state disks (SSD), silicon disk drives (SDD), read only memories (ROMs), random access memories (RAMs), compact disc read only memories (CD-ROMs), magnetic tapes, floppy discs, and optical data storage devices. In addition, the computer may include a processor of an artificial intelligence device.

### INDUSTRIAL APPLICABILITY

In the LED driving device according to the present disclosure, the LED voltage may be sensed to select the LED driving conditions, and the current flowing through each LED may be adjusted so that the sum of the LED power corresponding to some LED driving conditions and the sum of the LED power corresponding to all the LED driving are the same to prevent the brightness reduction by always uniformly maintaining the LED power regardless of the battery voltage, and thus, the industrial applicability is remarkable.

## Claims

1. An LED driving device comprising:
a selection unit configured to sense a voltage flowing through an LED string unit so as to select an LED driving condition of the LED string unit on the basis of the sensed voltage; and
a current control driving unit configured to control LED current so that some or all of LEDs of the LED string unit are driven in correspondence to the LED driving condition of the selection unit,
wherein the current control driving unit is configured to adjust current flowing through each LED so that the sum of LED power corresponding to the driving of the some of the LEDs and the sum of LED power corresponding to the driving of all of the LEDs are the same.

2. The LED driving device according to claim 1, wherein the selection unit is configured to:
sense a node voltage of the LED string unit;
compare the sensed node voltage with a preset node reference voltage; and
select the LED driving condition on the basis of the comparison result.

3. The LED driving device according to claim 2, wherein the selection unit is configured to sense the node voltage from a node between a first group and a second group when the plurality of LEDs provided in the LED string unit are separated into the first group and the second group when sensing the node voltage.

4. The LED driving device according to claim 3, wherein the first group comprises at least one LED and is disposed between the battery and the second group,
the second group comprises at least one LED and is disposed between the first group and the ground, and
the selection unit is configured to output a first selection signal that drives only the LEDs of the first group or a second selection signal that drives all of the LEDs of the first group and the second group on the basis of the comparison result between the sensed node voltage and the present node reference voltage.

5. The LED driving device according to claim 2, wherein, when selecting the LED driving condition, the selection unit is configured to:
output a first selection signal that drives only some of the LEDs of the LED string unit when the sensed node voltage is less than the node reference voltage; and
output a second selection signal that drives all of the LEDs of the LED string unit when the sensed node voltage is greater than the node reference voltage.

6. The LED driving device according to claim 2, wherein the selection unit comprises a comparator comprising a first input terminal into which the node voltage of the LED string unit is input, a second input terminal into which the preset node reference voltage is input, and an output terminal configured to output a selection signal to the current control driving unit.

7. The LED driving device according to claim 1, wherein the current control driving unit comprises:
a voltage adjustment unit configured to provide one of a plurality of reference voltages in correspondence to a selection signal of the section unit; and
a current adjustment unit switched in correspondence to the reference voltage input from the voltage adjustment unit to adjust the LED current so that some or all of the LEDs of the LED string unit are driven.

8. The LED driving device according to claim 7, wherein the voltage adjustment unit comprises:
a voltage regulator configured to provide a first reference voltage, a second reference voltage lower than the first reference voltage, and a third reference voltage lower than the second reference voltage and output the second reference voltage to the current adjustment unit; and
a switch switched to output the first reference voltage or the third reference voltage to the current adjustment unit in correspondence to the selection signal of the section unit.

9. The LED driving device according to claim 8, wherein the current adjustment unit comprises:
a first switch circuit that is turned on/off in correspondence to the first reference voltage or the third reference voltage; and
a second switch circuit that is turned off/on in correspondence to the on/off of the first switch circuit,
wherein, when the first switch circuit is turned on, and the second switch circuit is turned off, only some of the LEDs of the LED string unit are driven, and
when the first switch circuit is turned off, and the second switch circuit is turned on, all of the LEDs of the LED string unit are driven.

10. The LED driving device according to claim 9, wherein the first switch circuit comprises:
a first amplifier comprising a first input terminal connected to the switch to receive the first reference voltage or the third reference voltage, a second input terminal connected to the ground, and an output terminal configured to output a first signal when the first reference voltage is input, and a second signal when the third reference voltage is input; and
a first transistor connected to the output terminal of the first amplifier so as to be turned on when the first signal is input from the output terminal of the first amplifier and be turned off when the second signal is input from the output terminal of the first amplifier.

11. The LED driving device according to claim 9, wherein the second switch circuit comprises:
a second amplifier comprising a first input terminal connected to the voltage regulator to receive the second reference voltage, a second input terminal connected to the first switch circuit to receive the first reference voltage or the third reference voltage, and an output terminal configured to output a first signal when the second reference voltage and the third reference voltage lower than the second reference voltage are input, and output a second signal when the second reference voltage and the first reference voltage higher than the second reference voltage are input; and
a second transistor connected to the output terminal of the second amplifier so as to be turned on when the first signal is input from the output terminal of the second amplifier and be turned off when the second signal is input from the output terminal of the second amplifier.

12. The LED driving device according to claim 7, wherein the voltage the voltage adjustment unit comprises:
a voltage regulator configured to provide a first reference voltage and a second reference voltage lower than the first reference voltage; and
a switch switched to output the first reference voltage or the second reference voltage to the current adjustment unit in correspondence to the selection signal of the section unit.

13. The LED driving device according to claim 12, wherein the voltage regulator comprises:
a first output terminal configured to output the first reference voltage; and
a second output terminal configured to the second reference voltage,
wherein the first output terminal and the second output terminal of the voltage regulator are connected to the switch.

14. The LED driving device according to claim 12, wherein the switch is configured to:
connect a first output terminal of the voltage regulator so as to apply the first reference voltage to the current adjustment unit when a first selection signal is input from the selection unit; and
connect a third output terminal of the voltage regulator so as to apply the second reference voltage to the current adjustment unit when a second selection signal is input from the selection unit.

15. The LED driving device according to claim 14, wherein the current adjustment unit comprises:
a third switch circuit that is turned on/off in correspondence to the selection signal of the selection unit; and
a fourth switch circuit that is turned on/off in correspondence to the first reference voltage or the second reference voltage,
wherein, when the third switch circuit is turned on, and the fourth switch circuit is turned on, only some of the LEDs of the LED string unit are driven, and
when the third switch circuit is turned off, and the fourth switch circuit is turned on, all of the LEDs of the LED string unit are driven.

16. The LED driving device according to claim 15, wherein the third switch circuit comprises:
an inverter configured to invert the selection signal of the selection unit; and
a second transistor connected to an output terminal of the inverter so as to be turned on when a first signal is input from the output terminal of the inverter, and turned off when a second signal is input from the output terminal of the inverter.

17. The LED driving device according to claim 15, wherein the fourth switch circuit comprises:
an amplifier including a first input terminal connected to the switch of the voltage adjustment unit to receive the first reference voltage or the second reference voltage lower than the first reference voltage, a second input terminal connected to the ground, and an output terminal configured to output a first signal when the first reference voltage is input, and output a second signal when the second reference voltage is input; and
a first transistor connected to the output terminal of the amplifier so as to be maintained to be turned on when the first signal or the second signal is input from the output terminal of the amplifier.

18. The LED driving device according to claim 1, wherein the current control driving unit is configured to adjust current flowing through each LED so that, when a first selection signal corresponding to a first LED driving condition, under which only some of the LEDs of the LED string are driven, is input from the selection unit, the current flowing through each LED is adjusted so that the sum of the second LED power corresponding to the driving of some LEDs is the same as the sum of the first LED power corresponding to the driving of all the LEDs.

19. An LED driving member of an LED driving device configured to drive LEDs of an LED string unit, the LED driving method comprising:
sensing a voltage flowing through the LED string unit;
selecting an LED driving condition of the LED string unit on the basis of the sensed voltage;
controlling LED current so that some or all of the LEDs of the LED string unit are driven in correspondence to the LED driving condition,
wherein, in the controlling of the LED current so that some or all of the LEDs are driven, the current flowing through each LED is adjusted so that the sum of LED power corresponding to the driving of some of the LEDs and the sum of LED power corresponding to the driving of all of the LEDs are the same.

20. An LED lighting device comprising:
an LED string unit to which a plurality of LEDs are connected;
a battery unit configured to supply a voltage to the LED string unit; and
an LED driving unit configured to drive some or all of the LEDs of the LED string unit,
wherein the LED driving unit is configured to:
sense a voltage flowing through an LED string unit to select an LED driving condition of the LED string unit on the basis of the sensed voltage;
control LED current so that some or all of the LEDs of the LED string unit are driven in correspondence to the LED driving condition; and
adjust current flowing through each LED so that the sum of LED power corresponding to the driving of the some of the LEDs and the sum of LED power corresponding to the driving of all of the LEDs are the same.
